# EUROPEAN PATENT APPLICATION

(11) **EP 2 275 855 A1**
(43) Date of publication of application: **19.01.2011**
(21) Application number: 10186199.5
(22) Date of filing: 10.06.2005
(51) Int. Cl.: G02C 7/02

(54) **Variable geometry lens**

(30) Priority: 10.06.2004 US 578641 P
(62) Divisional of application: 05760951.3
(71) Applicant: 3M Innovative Properties Company, Saint Paul, MN 55133-3427 (US)
(72) Inventor: Stanley, Glen, Woodstock, CT 06281 (US); Fecteau, Keith E., Wilbraham, MA 01095 (US)
(74) Representative: Towlson, Samantha Jayne

(57) **Abstract**

A variable lens geometry is constructed through a series of spaced vertical curves on and perpendicular to a horizontal curve. Variable geometry is attained by varying the size of the vertical curves along the horizontal curve. In one embodiment, at least one vertical curve more towards the end or temple region of the lens is smaller than at least one vertical curve more towards the interior or bridge region. In another embodiment, the sizes of the vertical curves decrease along the horizontal curve from the bridge portion to the temple portion.

## Description

### CROSS REFERENCE TO RELATED APPLICATIONS

The present application claims priority to co-pending United States Provisional Patent Application Serial No. 60/578,641, filed June 10, 2004, the entire contents of which are specifically incorporated herein by reference.

### BACKGROUND

The present disclosure describes novel apparatus and method for providing variable geometry lenses.

Current lens geometries require an axis of rotation to facilitate polishing. Such axis of rotation requirement greatly restricts the shape of the lens and the styling of the eyewear.

While a large number of shapes and styles are available for lenses formed on an axis of rotation, the art would benefit from alternate geometries.

### SUMMARY

The presently described variable lens geometry provides a unique construction, comprising a series of spaced, varied vertical curves on and perpendicular to a horizontal curve. Variable geometry is attained by varying the size of the vertical curves along the horizontal curve.

In one embodiment, at least one vertical curve more towards the end or temple region of the lens is smaller than at least one vertical curve more towards the interior or bridge region.

In another embodiment, the sizes of the vertical curves decrease along the horizontal curve from the bridge portion to the temple portion.

In another embodiment, the varying vertical curves are regularly spaced along and perpendicular to the horizontal curve.

The above-discussed and other features and advantages of the apparatus and method will be appreciated and understood by those skilled in the art from the following drawings and detailed description.
Following is a list of embodiments according to the invention:
1. A lens having a variable lens geometry, comprising:
   a lens having a horizontal curve and a series of spaced, varied vertical curves on and perpendicular to said horizontal curve.
2. The variable lens geometry in accordance with embodiment 1, wherein at least one vertical curve more towards the end or temple region of the lens is smaller than at least one vertical curve more towards the interior or bridge region.
3. The variable lens geometry in accordance with embodiment 1, the sizes of the vertical curves decrease along the horizontal curve from a bridge portion of said lens to a temple portion of said lens.
4. The variable lens geometry in accordance with embodiment 1, wherein said varying vertical curves are regularly spaced along said horizontal curve.
5. The variable lens geometry in accordance with embodiment 1, wherein the size of the vertical curves vary in proportion to their location on the horizontal curve.
6. The variable lens geometry in accordance with embodiment 1, wherein said lens comprises one half of a dual lens system.
7. The variable lens geometry in accordance with embodiment 1, wherein said lens is a unitary lens.
8. A lens having a variable lens geometry, comprising:
   a lens having a horizontal curve and a series of spaced, varied vertical curves on and perpendicular to said horizontal curve, wherein at least one vertical curve more towards the end or temple region of the lens is smaller than at least one vertical curve more towards the interior or bridge region, and wherein said varying vertical curves are regularly spaced along said horizontal curve.
9. The variable lens geometry in accordance with embodiment 8, wherein the size of the vertical curves vary in proportion to their location on the horizontal curve.
10. A lens having a variable lens geometry, comprising:
   a lens having a horizontal curve and a series of spaced, varied vertical curves on and perpendicular to said horizontal curve, wherein the sizes of the vertical curves decrease along the horizontal curve from a bridge portion of said lens to a temple portion of said lens, and wherein said varying vertical curves are regularly spaced along said horizontal curve.
11. The variable lens geometry in accordance with embodiment 10, wherein the size of the vertical curves vary in proportion to their location on the horizontal curve.

### BRIEF DESCRIPTION OF THE DRAWINGS

Referring now to the drawings, wherein like elements are numbered alike in the several FIGURES:

FIGURE 1 illustrates an exemplary lens including one possible variable lens geometry; and

FIGURE 2 illustrates another exemplary lens including a possible variable lens geometry.

### DETAILED DESCRIPTION OF EXEMPLARY EMBODIMENTS

Reference will now be made in detail to exemplary embodiments, examples of which are illustrated in the accompanying drawings.

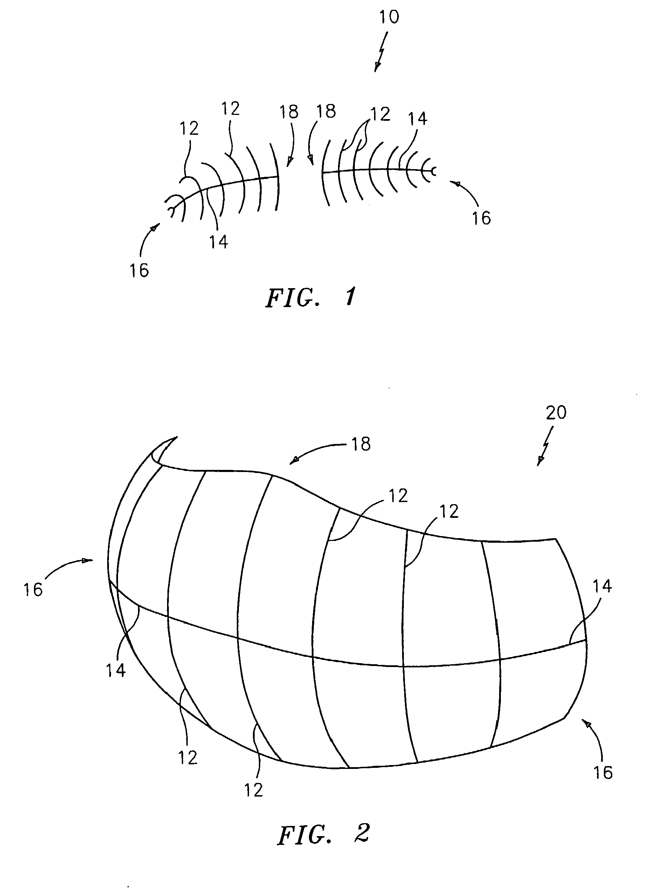

Referring now to FIGURE 1, the geometry of exemplary left and right lenses are illustrated generally at 10. The exemplary variable lens geometry is constructed through a series of spaced vertical curves 12 on and perpendicular to a horizontal curve 14. Variable
geometry is attained by varying the size of the vertical curves along the horizontal curve.

In one embodiment, at least one vertical curve 12 more towards the end or temple region, shown generally at 16 of the lens is smaller than at least one vertical curve 12 more towards the interior or bridge region, shown generally at 18. In another embodiment, the sizes of the vertical curves 12 decrease along the horizontal curve 14 from the bridge portion 18 to the temple portion 16.

In another embodiment, the size of the vertical curves 12 vary in proportion to their location on the horizontal curve 14.

Referring now to FIGURE 2, another exemplary lens including a variable lens geometry is illustrated generally at 20. Lens 20 is a unitary lens including a horizontal curve 14, and a plurality of vertical curves 12 provided on said horizontal curve 14. The illustrated exemplary variable lens geometry is constructed through a series of regularly spaced vertical curves 12 on and perpendicular to the horizontal curve 14. Variable geometry is attained by varying the size of the vertical curves along the horizontal curve.

Lenses in accordance with the present disclosure may be manufactured by any means facilitating variation of vertical curves along a horizontal lens curve. In one exemplary embodiment, such lenses are produced by an injection molding process.

It will be apparent to those skilled in the art that, while exemplary embodiments have been shown and described, various modifications and variations can be made to the present apparatus and method disclosed herein without departing from the spirit or scope of the invention. Accordingly, it is to be understood that the various embodiments have been described by way of illustration and not limitation.

## Claims

1. A lens having a variable lens geometry, comprising:
a lens (10; 20) having a horizontal curve (14) and a series of spaced, varied vertical curves (12) on and perpendicular to said horizontal curve, wherein the sizes of the vertical curves (12) decrease along the horizontal curve (14) from a bridge portion (18) of said lens to a temple portion (16) of said lens.

2. The variable lens geometry in accordance with claim 1, wherein said varying vertical curves (12) are regularly spaced along said horizontal curve (14).

3. The variable lens geometry in accordance with claim 1, wherein the size of the vertical curves (12) vary in proportion to their location on the horizontal curve (14).

4. The variable lens geometry in accordance with claim 1, wherein said lens comprises one half of a dual lens system.

5. The variable lens geometry in accordance with claim 1, wherein said lens is a unitary lens (20) for eyewear.
